**Europäisches Patentamt**

**European Patent Office**

**Office européen des brevets**

(19)

(11) Numéro de publication : **0 010 088**

**B1**

(12) # FASCICULE DE BREVET EUROPÉEN

(45) Date de publication du fascicule du brevet :
**01.06.83**

(51) Int. Cl.³ : **B 65 D 5/56**

(21) Numéro de dépôt : **78900135.1**

(22) Date de dépôt : **02.10.78**

(86) Numéro de dépôt international :
**PCT/FR 78/00027**

(87) Numéro de publication internationale :
**WO WO/79001 (05.04.79 Gazettee 79/07)**

(54) **Contenant en carton doublé d'une pellicule en matière synthétique et comprenant au moins deux compartiments.**

(30) Priorité : **03.10.77 FR 7729713**

(43) Date de publication de la demande :
**30.04.80 Bulletin 80/09**

(45) Mention de la délivrance du brevet :
**01.06.83 Bulletin 83/22**

(84) Etats contractants désignés :
**CH DE GB LU SE**

(56) Documents cités :
**DE A 2 220 021**
**FR A 2 197 776**
**FR A 2 211 927**
**US A 3 547 722**

(73) Titulaire : **SOCIETE PARISIENNE D'IMPRESSION ET DE CARTONNAGE**
**41, avenue de l'Agent Sarre**
**F-92700 Colombes (FR)**
**BODET, Jean, Augustin**
**42, Avenue du Maréchal Douglas Haig**
**F-78000 Versailles (Yvelines) (FR)**

(72) Inventeur : **CHAZAL, Guy, Albert**
**8, rue du 11 Novembre**
**95110 Sannois (FR)**
Inventeur : **BODET, Jean, Augustin**
**42, Avenue du Maréchal Douglas-Haig**
**F-78000 Versailles (FR)**

(74) Mandataire : **Rataboul, Michel**
**69, rue de Richelieu**
**F-75002 Paris (FR)**

## Contenant en carton doublé d'une pellicule en matière synthétique et comprenant au moins deux compartiments

L'invention concerne un contenant du type comprenant une partie en carton et une partie en matière synthétique associées l'une à l'autre afin qu'il présente à la fois les avantages de la matière synthétique (imperméabilité par exemple) et les avantages du carton (imprimabilité par exemple).

On connaît depuis longtemps le procédé de fabrication de contenants en matière synthétique qui consiste à thermoformer un film en matière synthétique dans un moule dont la forme correspond à l'emballage désiré.

Par ailleurs, on a déjà essayé de combiner le procédé de thermoformage de matière synthétique avec des contenants en carton afin d'obtenir à la fois les avantages de la matière synthétique d'une part, et ceux du carton d'autre part. En effet, le carton a pour avantage de pouvoir être imprimé et d'avoir, par conséquent, une excellente présentation mais a, en revanche, l'inconvénient de devoir être mis en volume au moyen de pattes d'assemblage ou de collage qui nuisent à la continuité de ses surfaces tandis que, de son côté, la matière synthétique présente l'avantage d'être continue et totalement imperméable, mais présente l'inconvénient de ne pas pouvoir être imprimée ou décorée de manière simple.

Le brevet américain US-A-3 547 722 décrit un procédé de fabrication d'un emballage qui comprend, d'une part un flan de carton découpé et rainé et, d'autre part, une feuille protectrice.

Les parois en carton sont placées jointivement et sont maintenues ainsi par la feuille protectrice thermoformée. Mais les parois ne présentent pas de rebord périphérique plan et se terminent selon des arêtes aiguës, cette disposition étant incompatible avec la prévision d'un couvercle soudé. En outre, aucune paroi ne permet de compartimenter le contenant.

Le brevet français FR-A-2 211 927 décrit un contenant qui présente un rebord périphérique mais, selon ce brevet, un revêtement thermoplastique est appliqué sur un flan de carton avant que les parois soient redressées.

Cela ressort des explications qui sont données dans ce brevet page 5, ligne 36 à page 6, ligne 22.

Le contenant, selon ce brevet, doit présenter des languettes d'angle 13, 15, 17 et 19 qui doivent être rabattues et collées sur les parois de l'emballage par thermosoudage (page 7, lignes 12 à 20).

Ainsi donc, la prévision d'un rebord périphérique constitué par des pattes 32, 34, 36 et 38 permet, certes, de placer un couvercle 29 mais ne garantit pas du tout la réelle étanchéité du contenant. Il est d'ailleurs précisé (page 6, lignes 7 à 15) que le récipient est sensiblement étanche à l'eau et que si les surfaces du récipient sont étanches, cela signifie que le revêtement plastique rend étanche toute la surface sur laquelle il est appliqué mais que les bords de l'emballage qui se trouvent ensuite juxtaposés après pliage restent ouverts car, eux, ne sont pas recouverts d'un revêtement étanche. Il en résulte la nécessité de prendre de très grandes précautions qui sont préconisées dans ce brevet pour le collage du couvercle 29 sur ce rebord.

En d'autres termes, l'absence d'étanchéité dans les angles du rebord doit être compensée par une surface adhésive 31 (page 9, lignes 11 et 12, et page 9, lignes 15 à 17).

Dans ce brevet, il est également prévu un cloisonnement permettant d'obtenir deux compartiments. Mais l'étanchéité entre ces derniers n'est pas évoquée car, avec les moyens enseignés, il est déjà très difficile sinon impossible d'assurer l'étanchéité entre le couvercle et les rebords périphériques.

L'invention remédie aux inconvénients et défauts indiqués ci-dessus.

A cette fin, l'invention a pour objet un contenant en carton doublé d'une pellicule en matière synthétique continue et étanche qui adhère au carton par toute sa surface, du type comprenant des fonds et des parois munies de rebords périphériques disposés dans un seul plan, déterminant au moins deux compartiments qui comprennent chacun un fond et quatre parois de sorte que deux compartiments voisins sont séparés par deux parois en regard l'une de l'autre, la pellicule s'étendant par-dessus ces parois en regard (voir FR-A-2 211 927), caractérisé en ce que les parois en regard sont séparées, à leur sommet, par un rebord intérieur qui s'étend continûment du rebord périphérique d'une paroi extérieure à celui d'une autre et qui est situé dans le même plan que les rebords périphériques, afin qu'un couvercle puisse être rendu solidaire à la fois des rebords périphériques et du ou des rebords intérieurs.

Selon d'autres caractéristiques de l'invention :
— une seule des deux parois en regard présente un rebord et celui-ci s'étend jusqu'à l'extrémité supérieure de l'autre paroi, afin que les arêtes d'extrémité du rebord et de ladite paroi soient sensiblement jointives ;
— les deux parois en regard présentent chacune un rebord et ces deux rebords sont rabattus dans un même plan, leurs arêtes étant sensiblement jointives ;
— les deux parois en regard présentent chacune un rebord et ces deux rebords sont rabattus l'un sur l'autre, le rebord du dessus s'étendant sensiblement jusqu'au droit du sommet de l'autre paroi ;
— au moins deux fonds et au moins deux parois en regard l'une de l'autre sont en une seule pièce et sont délimités par des lignes de pliage, les deux parois en regard étant solidaires par l'intermédiaire d'un rebord.

L'invention procure un contenant qui présente des avantages très marqués grâce auxquels il

peut être fermé de manière étanche, ce qui lui donne les qualités nécessaires à des opérations de stérilisation, congélation, etc...

L'invention sera mieux comprise à l'aide de la description détaillée ci-après faite en référence au dessin annexé.

Bien entendu, la description et le dessin ne sont donnés qu'à titre d'exemple indicatif et non limitatif.

La figure 1 est une vue en perspective d'un contenant conforme à l'invention, réalisé sous forme d'une barquette à trois compartiments ;

La figure 2 est une vue en plan de ce même emballage ;

La figure 3 est une vue faite en coupe selon la ligne III-III de la figure 2 et montre le contenant au moment de sa sortie du moule de mise en forme ;

Les figures 4 à 7 sont des vues schématiques partielles en coupe montrant différentes variantes de réalisation des cloisons de séparation des compartiments.

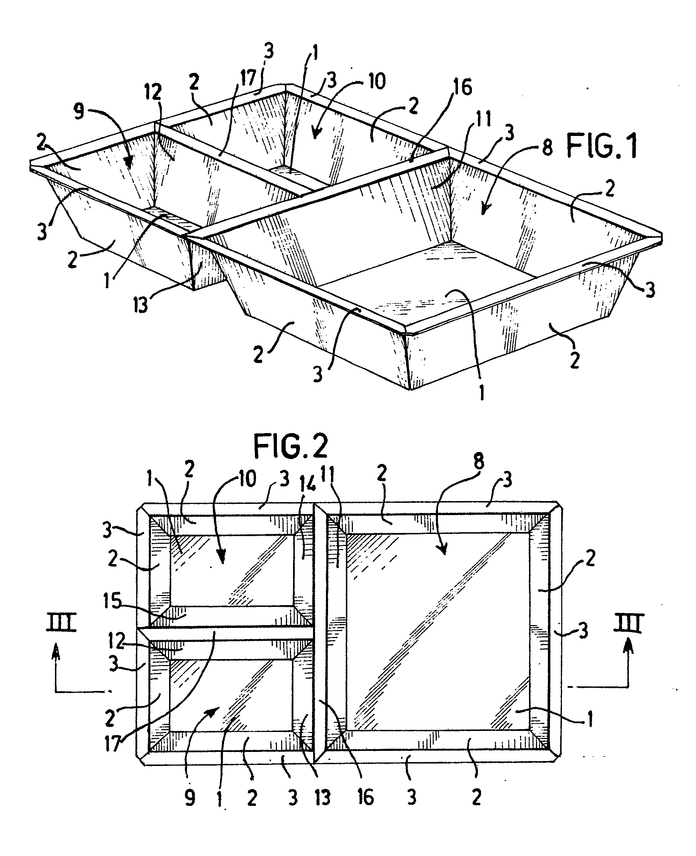

En se reportant aux figures 1 à 3, on voit qu'un contenant conforme à l'invention est obtenu à partir d'un flan de carton découpé et rainé pour constituer des fonds rectangulaires 1 et des parois latérales 2 solidaires chacune d'un bord 3.

Les parois 2 sont redressées par rapport aux fonds 1 par pliage le long de lignes de rainage et sont à arêtes vives, c'est-à-dire que lorsqu'elles sont dressées, elles sont jointives, sans superposition, par leurs arêtes adjacentes. Les rebords 3 des parois 2 sont rabattues vers l'extérieur le long d'autres lignes de rainage et leurs extrémités sont couplées ou biseautées de telle manière que, lors de leur rabattement dans un plan substantiellement parallèle à celui des fonds 1, leurs extrémités soient adjacentes sans superposition.

Le flan, ainsi découpé et plié, est maintenu en volume en prenant soin qu'aucune superposition de paroi adjacente ou de bord adjacent ne se produise, puis on y applique une pellicule en matière synthétique 4, par tout moyen connu, de telle manière que cette pellicule en matière synthétique 4 soit appliquée d'une manière continue, à la fois sur les fonds 1, sur la partie intérieure des parois latérales 2 et sur les rebords 3, ce qui assure à la fois le maintien en volume du contenant par une sorte de collage des différents éléments entre eux et une couche étanche grâce à laquelle les interstices qui peuvent subsister entre deux parois 2 adjacentes d'une part, et entre deux rebords 3 adjacents d'autre part, soient parfaitement obturés.

Ce contenant constitue une sorte de barquette devant recevoir un couvercle thermo-soudé comme cela est connu en soi.

On remarque que ce contenant présente des parois extérieures aussi bien que des parois intérieures parfaitement continues et sans aucune surépaisseur, puisqu'il n'y a pas de superposition de carton.

Le rebord situé au sommet des parois est également continu et placé, comme représenté, dans un seul et même plan sur lequel le couvercle doit être rapporté.

Un contenant conforme à l'invention présente des parois internes qui délimitent des compartiments séparés.

Dans l'exemple représenté, le contenant comprend un premier grand compartiment 8 et deux autres petits compartiments respectivement 9 et 10.

Conformément à l'invention, chacun des compartiments comprend un fond et quatre parois de sorte que deux compartiments voisins (8 et 9 d'une part, 8 et 10 d'autre part, 9 et 10 d'autre part) sont délimités par deux parois en regard l'une de l'autre et séparées par un rebord.

Lorsque le contenant doit comporter trois compartiments, comme cela est représenté, il est avantageux que chacun d'eux soit constitué par un flan de carton séparé, mais lorsqu'il n'y a que deux compartiments, par exemple, il est alors possible de prévoir un flan découpé de telle manière que l'on crée par pliage, en une seule pièce, un rebord d'une paroi extérieure, une première paroi extérieure, un premier fond, une première paroi médiane, un rebord, la deuxième paroi médiane, le deuxième fond, la deuxième paroi extérieure et son rebord.

Lorsque les compartiments sont constitués à partir de flans indépendants, il faut assurer de la meilleure manière possible la liaison entre ces compartiments.

Cela est obtenu, conformément à l'invention, selon plusieurs variantes possibles.

Sur les figures 1, 2 et 3, on voit que les compartiments sont séparés par deux parois en regard qui sont réunies à leur sommet par un rebord de la même largeur que les rebords 3 et situé dans le même plan qu'eux.

Le compartiment 8 comporte trois parois extérieures 2 et une paroi médiane 11. Le compartiment 9 comprend deux parois extérieures 2 et deux parois médianes respectivement 12 et 13. Il en est de même pour le compartiment 10 qui comprend deux parois extérieures 2 et deux parois médianes respectivement 14 et 15.

Les parois médianes 11, d'une part, et 13 et 14 d'autre part, sont réunies à leur sommet par un rebord 16 situé dans le même plan que les rebords périphériques 3. Les parois médianes 12 et 15 sont également réunies à leur sommet par un rebord 17 situé dans le même plan que les rebords périphériques 3.

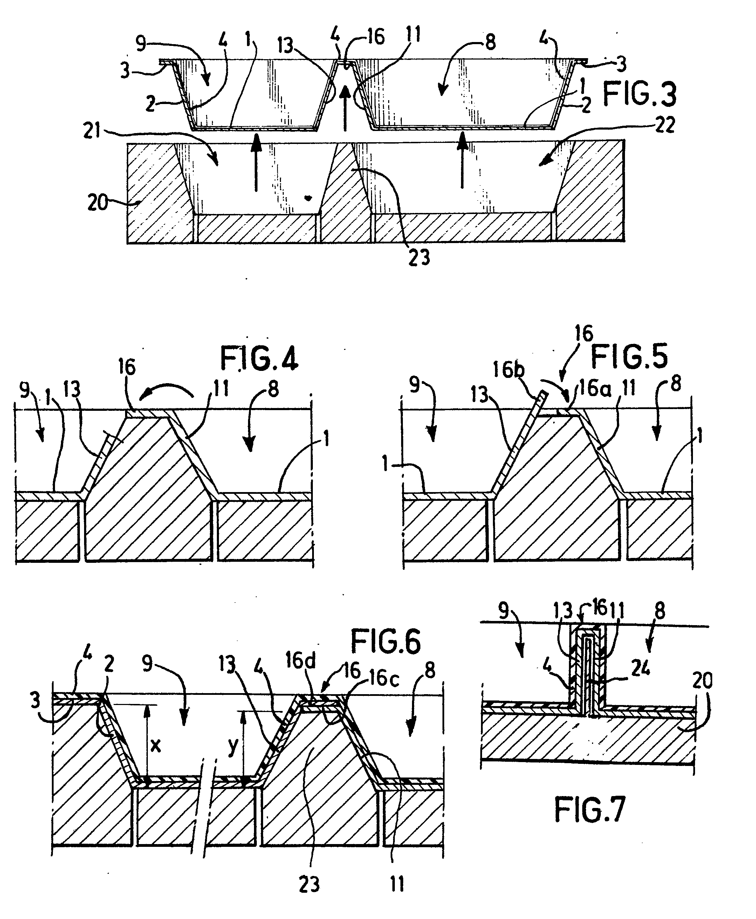

Sur la figure 3, on voit que pour réaliser un contenant selon les figures 1 et 2, on utilise un dispositif qui comprend une embase 20 dans laquelle sont ménagés deux alvéoles 21 et 22 séparés par une cloison 23 qui constitue un relief de forme et dimension correspondant à l'intervalle extérieur entre les deux compartiments 8 et 9.

Cette embase comporte également une cloison perpendiculaire à la cloison 23 mais qui n'est pas visible sur la figure 3 et qui correspond à la formation de la séparation entre les compartiments 9 et 10 du contenant.

Pour fabriquer un tel contenant, on place dans chaque alvéole de l'embase 20 un flan de carton découpé et plié pour constituer autant de compartiments qu'il y a d'alvéoles dans l'embase et que doit comporter le contenant terminé.

Lorsque ces différentes pièces de carton sont ainsi maintenues en volume dans l'embase 20, on procède au thermoformage de la pellicule en matière synthétique 4 qui recouvre d'une manière continue l'ensemble des parois internes du contenant ainsi que les rebords périphériques 3 et les rebords intérieurs 16 et 17.

On est ainsi assuré que les produits devant être placés dans les différents compartiments 8, 9 et 10 seront totalement isolés pendant les manipulations du contenant. La façon d'obtenir les rebords 16 et 17 peut se faire selon différentes variantes qui vont maintenant être décrites. En se reportant à la figure 4, on voit que le rebord 16 est solidaire de la paroi 11 et a une largeur égale à celle que l'on veut donner à ce rebord intérieur. La paroi 13, au contraire, n'a pas de rebord médian, de sorte que son extrémité est jointive avec l'arête du rebord 16.

En se reportant maintenant à la figure 5, on voit que le rebord est formé par rabattement de deux demi-rebords 16a, solidaire de la paroi 11, et 16b, solidaire de la paroi 13.

On remarque que, selon ces deux variantes, il n'y a aucune superposition de carton et que les différentes parties du contenant sont recouvertes et réunies par la pellicule en matière synthétique 4.

En se reportant maintenant à la figure 6, on voit que contrairement aux variantes des figures 4 et 5, le rebord médian 16 est formé par superposition de deux rebords respectivement 16c, solidaire de la paroi 11 et 16d, solidaire de la paroi 13, mais la hauteur de la cloison du moule 23 est calculée de telle manière que lorsque les deux rebords 16c et 16d sont repliés l'un sur l'autre, le rebord 16d situé sur le rebord 16c se trouve dans le même plan que les rebords périphériques 3 afin d'assurer la continuité de tous les rebords dans un même plan, ce qui permet, comme déjà dit ci-dessus, de placer un couvercle que l'on peut fixer à la fois sur les rebords périphériques 3 et sur les rebords médians 16 et 17.

Ainsi, on voit que la partie périphérique du moule 20 s'étend sur une hauteur $x$ tandis que la cloison 23 s'étend sur une hauteur $y$ inférieure à la hauteur $x$ d'une valeur égale à l'épaisseur du flan de carton.

On note que s'il y a, ici, superposition au sens strict, il n'y a pas de surépaisseur sensible comme cela est au contraire le cas avec des contenants connus dont des pattes de raccordement se placent devant les parois.

Sur la figure 7, on voit que les parois 11 et 13 sont verticales et sont séparées par un étroit rebord 16 d'une largeur plus faible que celle des rebords périphériques 3.

Le moule comporte alors une cloison 24 qui est constituée d'une simple lame.

On voit que, grâce à l'invention, on peut obtenir des emballages plus ou moins complexes, selon le nombre de compartiments.

La fixation du couvercle sur les rebords périphériques 3 et sur les rebords intérieurs 16-17, assure l'étanchéité entre l'intérieur du contenant et l'extérieur d'une part, et entre les compartiments d'autre part.

Plus le rebord qui sépare deux compartiments est large, meilleures sont la fixation du couvercle et l'étanchéité qui en résulte.

**Revendications**

1. Contenant en carton doublé d'une pellicule en matière synthétique (4) continue et étanche qui adhère au carton par toute sa surface, du type comprenant des fonds (1) et des parois (2) munies de rebords périphériques (3) disposés dans un seul plan, déterminant au moins deux compartiments (8-9-10), qui comprennent chacun un fond (1) et quatre parois (2-11-12-13-14-15) de sorte que deux compartiments voisins (8-9, 8-10, 9-10) sont séparés par deux parois (11-13, 11-14, 12-15) en regard l'une de l'autre, la pellicule (4) s'étendant par-dessus ces parois en regard, caractérisé en ce que les parois (11-13, 11-14, 12-15) en regard sont séparées à leur sommet par un rebord intérieur (16-17) qui s'étend continûment du rebord périphérique (3) d'une paroi extérieure (2) à celui d'une autre et qui est situé dans le même plan que les rebords périphériques (3), afin qu'un couvercle puisse être rendu solidaire à la fois des rebords périphériques (3) et du ou des rebords intérieurs (16-17).

2. Contenant selon la revendication 1, caractérisé en ce qu'une seule (11) de deux parois en regard (11-13, 11-14) présente un rebord (16) et celui-ci s'étend jusqu'à l'extrémité supérieure de l'autre paroi (13-14) afin que les arêtes d'extrémité du rebord (16) et de ladite paroi (13-14) soient sensiblement jointives.

3. Contenant selon la revendication 1, caractérisé en ce que les deux parois en regard (11-13, 11-14) présentent chacune un rebord (16a-16b) et ces deux rebords (16a et 16b) sont rabattus dans un même plan, leurs arêtes étant sensiblement jointives.

4. Contenant selon la revendication 1, caractérisé en ce que les deux parois en regard (11-13, 11-14) présentent chacune un rebord (16c-16d) et ces deux rebords (16c et 16d) sont rabattus l'un sur l'autre, le rebord du dessus (16d) s'étendant sensiblement jusqu'au droit du sommet de l'autre paroi (11).

5. Contenant selon la revendication 1, caractérisé en ce qu'au moins deux fonds et au moins deux parois en regard de l'autre sont en une seule pièce et sont délimités par des lignes de pliage, les deux parois en regard étant solidaires par l'intermédiaire d'un rebord.

**Claims**

1. Cardboard container lined with a continuous and sealing film of synthetic material (4) which adheres to the cardboard with its entire surface, of the type having bases (1) and walls (2) provided with peripheral edges (3) positioned in a single plane, forming at least two compartments (8-9-10), each of which comprising a base (1) and four walls (2-11-12-13-14-15) so that two adjoining compartments (8-9, 8-10, 9-10) are separated by two walls (11-13, 11-14, 12-15), opposite to each other, the film (4) extending over said opposite walls, characterised in that the opposite walls (11-13, 11-14, 12-15) are separated at their top by an inner edge (16-17) which extends continuously from the peripheral edge (3) of an outer wall (2) to that of another one and which is situated in the same plane as the peripheral edges (3), so that a cover can be firmly connected both with the peripheral edges (3) and the inner edge or edges (16-17).

2. Container according to claim 1, characterised in that a single one (11) of the two opposite walls (11-13, 11-14) has an edge (16) and this extends to the upper end of the other wall (13-14) so that the end ridges of the edge (16) of said wall (13-14) are substantially adjoining.

3. Container according to claim 1, characterised in that the two opposite walls (11-13, 11-14) each have an edge (16a-16b), and these two edges (16a and 16b) are pressed down in a same plane, their ridges being substantially adjoining.

4. Container according to claim 1, characterised in that the two opposite walls (11-13, 11-14) each have an edge (16c-16d), and these two edges (16c and 16d) are pressed down upon each other, the upper edge (16d) extending substantially at right angles to the top of the other wall (11).

5. Container according to claim 1, characterised in that at least two bases and at least two walls opposite to each other are in one piece and are determined by folding lines, the two opposite walls being firmly interconnected by means of an edge.

**Ansprüche**

1. Behälter aus Karton, der mit einer fortlaufenden und undurchlässigen Schicht aus Kunststoff (4) kaschiert ist, die mit ihrer ganzen Fläche fest am Karton haftet, wobei der Behälter Böden (1) und Wände (2) hat, die mit Umfangsrändern (3) versehen sind, die in einer Ebene liegen und mindestens zwei Abteile (8-9-10) bilden, von denen jedes einen Boden (1) und. vier Wände (2-11-12-13-14-15) hat, so daß zwei benachbarte Abteile (8-9, 8-10, 9-10) von zwei sich gegenüberliegenden Wänden (11-13, 11-14, 12-15) getrennt sind, wobei sich die Schicht (4) über die sich gegenüberliegenden Wände erstreckt, dadurch gekennzeichnet, daß die sich gegenüberliegenden Wände (11-13, 11-14, 12-15) an ihren oberen Enden durch einen inneren Rand (16-17) getrennt sind, der sich fortlaufend vom Umfangsrand (3) einer äußeren Wand (2) bis zu demjenigen einer anderen erstreckt, und der in derselben Ebene wie die Umfangsränder (3) liegt, damit ein Deckel fest mit den Umfangsrändern (3) und mit dem inneren Rand bzw. den inneren Rändern (16-17) verbunden sein kann.

2. Behälter gemäß Anspruch 1, dadurch gekennzeichnet, daß eine einzige (11) der zwei sich gegenüberliegenden Wände (11-13, 11-14) einen Rand (16) aufweist und dieser sich bis zum oberen Ende der anderen Wand (13-14) erstreckt, damit die Endkanten des Rands (16) und der genannten Wand (13-14) im wesentlichen nebeneinanderliegen.

3. Behälter gemäß Anspruch 1, dadurch gekennzeichnet, daß die beiden sich gegenüberliegenden Wände (11-13, 11-14) je einen Rand (16a-16b) aufweisen und diese beiden Ränder (16a und 16b) auf dieselbe Ebene umgelegt sind, wobei deren Kanten im wesentlichen nebeneinanderliegen.

4. Behälter gemäß Anspruch 1, dadurch gekennzeichnet, daß die beiden sich gegenüberliegenden Wände (11-13, 11-14) je einen Rand haben (16c-16d) und diese beiden Ränder (16c und 16d) aufeinander umgelegt sind, wobei sich der obere Rand (16d) im wesentlichen bis zum Ende der anderen Wand (11) erstreckt.

5. Behälter gemäß Anspruch 1, dadurch gekennzeichnet, daß mindestens zwei Böden und mindestens zwei sich gegenüberliegende Wände aus einem Stück bestehen und durch Faltlinien begrenzt sind, wobei die beiden sich gegenüberliegenden Wände durch einen Rand fest miteinander verbunden sind.

FIG.1

FIG.2

FIG.3

FIG.4

FIG.5

FIG.6

FIG.7